# EUROPÄISCHE PATENTANMELDUNG

(11) **EP 1 256 935 A2**
(43) Veröffentlichungstag der Anmeldung: **13.11.2002**
(21) Anmeldenummer: 02100374.4
(22) Anmeldetag: 16.04.2002
(51) Int. Cl.: G10L 15/06

(54) **Verfahren zum Training und Betrieb eines Spracherkenners, Spracherkenner und Spracherkenner-Trainingssystem**

(30) Priorität: 07.05.2001 DE 10122087
(71) Anmelder: SIEMENS AKTIENGESELLSCHAFT, 80333 München (DE)
(72) Erfinder: Schneider, Tobias, 81825, München (DE)

(57) **Zusammenfassung**

Verfahren zum Training und Betrieb eines Spracherkenners, insbesondere zur sprecherunabhängigen Spracherkennung, mit einer Mehrzahl von Sprachproben-Datenbasen, des Trainings ein Gesamtmodell gebildet, wobei mindestens ein Teil der Sprachproben-Datenbasen in Abstimmung auf jeweils eine vorbestimmte typische Betriebsumgebung des Spracherkenners gebildet ist und der Spracherkenner in relativ selbständigen Trainingsphasen zur Gewinnung von Referenzen jeweils separat mit diesen Sprachproben-Datenbasen trainiert wird.

## Beschreibung

Verfahren zum Training und Betrieb eines Spracherkenners, Spracherkenner und Spracherkenner-Trainingssystem

Die Erfindung betrifft ein Verfahren zum Training und zum Betrieb eines Spracherkenners zur sprecherunabhängigen Spracherkennung nach dem Oberbegriff des Anspruchs 1, einen Spracherkenner nach dem Oberbegriff des Anspruchs 9 sowie ein Spracherkenner-Trainingssystem.

Nachdem die Spracheingabe für Textprogramme sowie die Sprachsteuerung von Gerätefunktionen sich bei PCs seit Jahren bewährt und einen hohen Grad an Erkennungsgenauigkeit erreicht hat, wird sie seit kurzem verstärkt auch bei einfacheren Endgeräten von Telekommunikations- bzw. Datennetzen, insbesondere Mobiltelefonen und Handheld-PCs und PDAs (Personal Digital Assistants) eingesetzt. Entsprechende Geräte sind bereits auf dem Markt erhältlich. Die Sprachsteuerung bietet hier einen erhöhten Bedienkomfort bei der Aktivierung häufig benötigter Funktionen bzw. beim Wählen häufig benutzter Rufnummern.

Die Spracherkennung auf derartigen Endgeräten beruht in der Regel auf Algorithmen der sprecherabhängigen Spracherkennung. Bei diesen Verfahren muß der Wortschatz durch Einsprechen aller Worte seitens des Benutzers trainiert werden.

Im Gegensatz dazu erlauben sprecherunabhängige Spracherkennungsverfahren den sofortigen Einsatz ohne Initialisierung, den sogenannten Enrollment-Prozeß. Einfachere, relativ preiswerte Endgeräte ("Low-Cost"-Geräte) verfügen bereits über relativ leistungsfähige Mikrocontroller oder Mikroprozessoren mit hoher Rechenleistung, so daß für die nächsten Jahre eine Ablösung der unbequemeren sprecherabhängigen Spracherkennung bei derartigen Geräten durch die hinsichtlich der benötigten Verarbeitungsleistung aufwendigere sprecherunabhängige Spracherkennung zu erwarten steht. Diese hat im übrigen den Vorteil, daß der Wortschatz nicht a priori bekannt sein muß - was bestimmte Anwendungen überhaupt erst möglich macht.

Grundsätzlich besteht bei allen Spracherkennern das Problem, daß bei wesentlichen akustischen Abweichungen des im Betrieb zu verarbeitenden Sprachdatenmaterials vom in der Trainingsphase benutzten Sprachdatenmaterial die Erkennungsleistung stark absinken kann. Dieser auch als Mismatch-Problem bezeichnete Umstand tritt besonders ausgeprägt bei einem Betrieb des Spracherkenners in einer stark geräuschbelasteten Umgebung (beispielsweise im fahrenden Kraftfahrzeug, in Produktionsanlagen, auf dem Bau, in Callcenter o. ä.) auf, aber auch bei Betrieb eines Spracherkenners durch Personen mit Stimmfärbungen und/oder Mundarten, die in dem in der Trainingsphase verwendeten Sprachmaterial nicht vertreten waren.

Während bei der sprecherabhängigen Spracherkennung die später im Betrieb zu erkennenden Worte vom Benutzer selbst und daher normalerweise in der Umgebung eingesprochen werden, die auch die spätere Betriebsumgebung darstellt, kann dies bei der sprecherunabhängigen Spracherkennung natürlich nicht gewährleistet werden. Das Training wird hier im Labor vom Technologielieferanten mit Datenbasen durchgeführt, die eine Vielzahl von durch unterschiedliche Sprecher erzeugten Sprachproben enthalten. Auch hier wird versucht, der Betriebsumgebung bereits beim Training Rechnung zu tragen. Geht es beispielsweise bei dem Spracherkenner um Telefonanwendungen, werden zum Training der akustischen Modelle "Telefondatenbasen" eingesetzt. Wird ein so trainierter Spracherkenner jedoch in einer gänzlich anderen Umgebung eingesetzt - im Beispiel statt bei einer Telefonanwendung also etwa im fahrenden Kraftfahrzeug - , so sinkt die Erkennungsleistung infolge des akustischen Mismatch zwischen Trainings- und Betriebssituation dramatisch ab.

Daher wurde bereits vorgeschlagen, Spracherkenner für multivalente Anwendungen mit einer "Mischung" verschiedener Sprachproben-Datenbasen zu trainieren, die in verschiedenen akustischen Umgebungen gewonnen wurden. Es hat sich jedoch herausgestellt, daß dieses Verfahren vielfach nicht zur gewünschten Erkennungsleistung in der Betriebsumgebung führt. In diesem Zusammenhang besteht auch das Problem, daß die im Training erfolgende Bildung der sogenannten Referenzen bzw. Referenzvektoren in starkem Maße von der Größe der eingesetzten Sprachproben-Datenbasen abhängig und im Rahmen der benutzten Verarbeitungsalgorithmen auch schwer steuerbar ist.

Der Erfindung liegt daher die Aufgabe der Bereitstellung eines verbesserten Verfahrens der gattungsgemäßen Art und eines entsprechenden Spracherkenners zugrunde, welche insbesondere eine Spracherkennung in Umgebungen unterschiedlichen Störcharakters mit hoher Erkennungsleistung ermöglichen.

Diese Aufgabe wird in ihrem Verfahrensaspekt durch ein Verfahren mit den Merkmalen des Anspruchs 1 und in ihrem Vorrichtungsaspekt durch einen Spracherkenner mit den Merkmalen des Anspruchs 9 gelöst. In Anspruch 14 wird ein für die Ausführung des Verfahrens geeignetes Spracherkenner-Trainingssystem angegeben.

Die Erfindung schließt den grundlegenden Gedanken ein, die Spracherkenner-Referenzen für jede Betriebsumgebung (Zielapplikation) auf den Betriebsumgebungen entsprechend gebildeten Sprachproben-Datenbasen getrennt zu trainieren und damit zu optimieren. Hierdurch wird eine verbesserte Parametrierbarkeit und Kontrolle der Referenzbildung für die typischen Betriebsumgebungen erreicht; man erhält also letztlich für alle vorgesehenen Betriebsumgebungen gut geeignete Referenzmodelle, die insgesamt eine hohe Spracherkenner-Performance liefern. Die verschiedenen Referenzmodelle werden, jeweils unter Kennzeichnung der entsprechenden Betriebsumgebung, für die sie trainiert wurden und gelten, zu einem Gesamtmodell zusammengefaßt. Im Betrieb des Spracherkenners in einer bestimmten Betriebsumgebung können auf Wortebene nur Referenzen verwendet werden, welche aus einer Sprachproben-Datenbasis gewonnen wurden, die in der gleichen oder einer ähnlichen Umgebung entstanden war.

In einer ersten bevorzugten Ausführung wird zum Training des Spracherkenners mindestens eine Sprachproben-Datenbasis verwendet, die in einer auf typische Weise akustisch gestörten Umgebung gebildet wurde - insbesondere in der Umgebung der Fahrgastzelle eines fahrenden Pkw oder anderen Verkehrsmittels, an einem typischen Industrie- oder Bauarbeitsplatz, in der akustischen Umgebung eines Großraumbüros oder einer Konferenz oder einer Sportveranstaltung o. ä..

In einer weiteren bevorzugten Ausführung umfaßt mindestens eine der Sprachproben-Datenbasen das begrenzte Vokabular einer typischen Zielapplikation, d. h. sie ist beispielsweise mit einem vorbestimmten Steuerwortschatz für die Bedienung eines Pkw und/oder Navigationssystems oder einer Audio- bzw. Videoanlage oder eines Computers oder von Geräten einer Hausinstallation gebildet.

Eine weitere bevorzugte Ausführung sieht vor, daß verschiedene Sprachproben-Datenbasen von Personen der beiden Geschlechter und/oder unterschiedlicher Altersgruppen und/oder mit verschiedenen Dialekten bzw. Mundarten eingesprochen sind und der Spracherkenner getrennt mit diesen Datenbasen trainiert wird. Er ist dann mit erhöhter Erkennungsleistung für entsprechende sprecher-spezifische Betriebsumgebungen einsetzbar, nimmt also quasi Merkmale eines sprecherabhängigen Spracherkennungssystems an.

Bei den erwähnten Referenzsystemen handelt es sich insbesondere um Wortmodelle und/oder phonetische Modelle, insbesondere Hidden-Markov-Modelle (HMM).

In einer weiteren bevorzugten Ausführung ist der Spracherkenner jedoch zur Unterstützung einer Grammatik ausgebildet und ermöglicht die Spracherkennung auf Satzebene, wozu entsprechende Grammatik-Hypothesen zur Verknüpfung der erkannten Worte aufgestellt und bearbeitet werden. Im Zusammenhang mit der Erfindung werden nur die zu genau einer Betriebsumgebung zugeordneten Referenzen zu Hypothesen zusammengesetzt, so daß die erwähnten Grammatik-Hypothesen ausschließlich aus den den spezifischen Betriebsumgebungen entsprechenden Sprachproben-Datenbasen abgeleitet werden. Auch auf Satzebene findet somit keine - als nachteilig erkannte - Vermischung von Referenzen aus unterschiedlichen Umgebungen statt.

Die Betriebseinstellung des Spracherkenners erfolgt bevorzugt selbsttätig im Ansprechen auf eine Erfassung der (akustischen) Charakteristika einer typischen Betriebsumgebung; sie kann jedoch grundsätzlich auch jeweils aktuell durch den Nutzer vorgegeben werden. Letzteres erscheint insbesondere dann als zweckmäßig, wenn die Charakteristika der Betriebsumgebung schwer akustisch erfaßbar sind - also beispielsweise bei Fernsteuer-Applikationen für verschiedenartige Gerätekonfigurationen oder in sprecher-differenzierten Applikationen.

Die oben erörterten Verfahrensaspekte haben in einem Spracherkennungssystem sowie einem Trainingssystem jeweils auch eine Entsprechung in Vorrichtungsmerkmalen, so daß die Vorrichtungsmerkmale eines solchen Systems - die ohnedies im Regelfall als Software- oder verknüpfte Hardware- und Softwarekomponenten realisiert sind - hier nicht gesondert erörtert werden.

Es wird lediglich darauf hingewiesen, daß ein erfindungsgemäß ausgebildeter Spracherkenner insbesondere eine über eine Eingabeeinrichtung durch den Nutzer oder über eine Erfassungseinrichtung selbsttätig gesteuerte Auswahleinrichtung zur Auswahl eines der in der Trainingsphase gewonnenen Referenzsysteme für die Betriebsphase aufweist. Weiterhin hat der Spracherkenner in seiner Ausführung zur Spracherkennung auf Satzebene einen Hypothesengenerator, welcher in jedem Betriebszustand zum ausschließlichen Zugriff auf jeweils ein spezifisches Referenzsystem ausgebildet ist.

Das Trainingssystem hat insbesondere eine Trainingssteuereinheit, die ein relativ unabhängiges Training mit den verschiedenen Sprachproben-Datenbasen mit separater Abspeicherung der erhaltenen Referenzen steuert.

Vorteile und Zweckmäßigkeiten der Erfindung ergeben sich im übrigen aus den abhängigen Ansprüchen sowie der nachfolgenden, skizzenartigen Beschreibung von Ausführungsbeispielen anhand der Figuren. Von diesen zeigen:
Fig. 1 eine schematische Darstellung eines Spracherkenner-Trainingssystems zur Gewinnung eines Spracherkennungsmodells gemäß einer Ausführungsform der Erfindung in Form eines Funktions-Blockschaltbildes und
Fig. 2 eine schematische Darstellung eines Spracherkenners mit dem gemäß Fig. 1 trainierten Spracherkennungsmodell, ebenfalls als Funktions-Blockschaltbild.

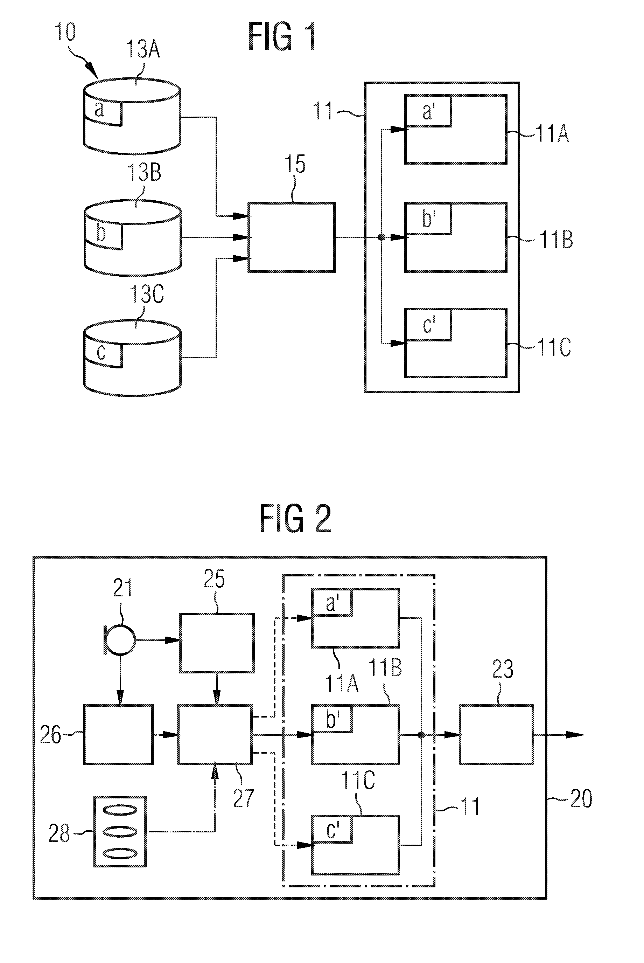

Fig. 1 zeigt skizzenartig ein Spracherkenner-Trainingssystem 10 zum Training eines sprecherunabhängigen Spracherkennungsmodells 11 unter Einsatz von drei Sprachproben-Datenbasen 13A, 13B, 13C in relativ unabhängigen Trainingsphasen, die durch eine Trainingsablaufsteuerung 15 gesteuert werden. Die Sprachproben-Datenbasen 13A bis 13C wurden unter verschiedenen akustischen Bedingungen gewonnen, die typischen Betriebsumständen eines zu trainierenden Spracherkenners entsprechen, und haben entsprechende Kennzeichnungen a, b, c. In den unabhängigen Trainingsphasen werden im Spracherkennungsmodell 11 aufgrund dort implementierter Algorithmen drei relativ unabhängige Referenzsysteme 11A, 11B und 11C gebildet. Diese tragen - entsprechend der Kennzeichnung der zu ihrer Gewinnung eingesetzten Sprachproben-Datenbasis - Referenz-Kennzeichnungen a', b', c'.

Wie in Fig. 2 dargestellt ist, wird das auf diese Weise trainierte Spracherkennungsmodell 11 mit den Referenzsystemen 11A, 11B, 11C in einem Spracherkenner 20 implementiert, der als Eingangssignale über ein Mikrofon 21 Sprachdaten empfängt und über eine Textausgabeeinheit 23 als Textdaten ausgibt. Die über das Mikrofon 21 aufgenommenen akustischen Signale (einschließlich der Sprachdaten) gelangen einerseits zu einer Sprach-Vorbereitungsstufe 25 und andererseits zu einer Umgebungs-Erfassungsstufe 26. Der Sprach-Vorverarbeitungsstufe 25 ist eine Referenzsystem-Auswahleinheit 27 nachgeschaltet, die die vorverarbeiteten Sprachsignale zur Erkennung einem der Referenzsysteme 11A bis 11C zuleitet. Die Referenzsystem-Auswahleinheit 27 hat zwei Steuereingänge, von denen der eine mit der Umgebungs-Erfassungsstufe 26 und der andere mit einer Eingabeeinheit 28 verbunden ist. Über die Umgebungs-Erfassungsstufe 26 wird im Ansprechen an das Ergebnis der Erfassung der akustischen Umgebungsbedingungen oder über die Eingabeeinheit 28 manuell die Auswahleinheit 27 derart angesteuert, daß das der aktuellen Betriebsumgebung des Spracherkenners 20 entsprechende Referenzsystem zur Spracherkennung ausgewählt wird.

Ein erstes konkretes Beispiel für die Implementierung der oben skizzierten Ausführung ist ein Spracherkennungssystem zur Bedienung eines Kraftfahrzeuges, einschließlich eines dort eingebauten Navigationssystems. Für ein solches Spracherkennungssystem können die Sprachproben-Datenbasen 13A bis 13C beispielsweise durch Einsprechen des relevanten Steuervokabulars durch verschiedene Sprecher (a) bei mit ausgeschaltetem Motor stehendem Fahrzeug, (b) bei mit eingeschaltetem Motor vor einer charakteristischen Straßenverkehrs-Geräuschkulisse fahrendem Fahrzeug und (c) bei fahrendem Fahrzeug mit zusätzlich eingeschalteter Musikanlage gebildet sein. Mit diesen unter höchst unterschiedlichen akustischen Umgebungsbedingungen erzeugten Datenbasen werden in relativ unabhängigen Trainingsphasen die relativ unabhängigen Referenzen 11A, 11B, 11C innerhalb des Spracherkennungsmodells 11 gebildet.

Beim Einsatz des Spracherkenners im Fahrzeug eines Kunden wird beim obigen Beispiel entweder durch diesen die relevante Betriebsumgebung manuell vorgewählt oder anhand der über das Mikrofon aufgenommenen akustischen Signale selbsttätig erfaßt. Die Sprachdaten werden in dem der Betriebsumgebung entsprechenden Referenzsystem verarbeitet und als Textdaten zur Steuerung der gewünschten Funktionen ausgegeben.

In einer weiteren sinnvollen Variante kann das Spracherkennungsmodell anhand von Sprachproben-Datenbasen trainiert werden, die von drei Gruppen von Personen, beispielsweise Männern, Frauen und Kindern, eingesprochen wurden. Es werden wieder in den einzelnen Trainingsphasen relativ unabhängige Referenzsysteme erzeugt. Beim Betrieb eines Spracherkenners, in dem das so trainierte Spracherkennungsmodell implementiert ist - beispielsweise zur Bedienung technischer Geräte in einem Haushalt per Fernsteuerung - kann wieder entweder durch manuelle Vorwahl seitens des jeweiligen Nutzers oder durch Erkennung der Stimmlage in der Erfassungsstufe die Vorauswahl des auf den aktuellen Nutzer angepaßten Referenzsystems erfolgen. Hierdurch wird eine Optimierung der Performance des Spracherkenners und damit der Treffsicherheit der Bedienung der sprachgesteuerten Geräte erreicht.

Die derzeit bevorzugte Ausführung der Erfindung kommt ohne spezielle Mittel zur Erfassung der Umgebung im Betrieb des Spracherkenners aus. Sie sieht vor, daß in separaten Verarbeitungswegen aufgrund eines vorbestimmten Verarbeitungsalgorithmus jeweils eine Erkennungs-Hypothese mit den Referenzen für die einzelnen Betriebsumgebungen berechnet wird. Eine Entscheidung bezüglich der zutreffenden Betriebsumgebung wird dann gewissermaßen implizit gewonnen, in dem die Erkennungs-Hypothese mit der höchsten Zutreffends-Wahrscheinlichkeit als Erkennungsergebnis ausgegeben wird. Da diese mit den Referenzen einer bestimmten Betriebsumgebung gewonnen wurde, enthält dieses Erkennungsergebnis eine Annahme über die aktuelle Betriebsumgebung, die an die Stelle einer tatsächlichen Erfassung tritt.

Liegen dem System allerdings Informationen über die tatsächliche Betriebsumgebung vor, kann der Verarbeitungsvorgang des Spracherkenners auf diese Umgebung, d.h. die dieser Umgebung zugeordneten Referenzen, beschränkt werden. Dies spart jedenfalls Verarbeitungskapazität und Verarbeitungszeit.

Die Ausführung der Erfindung ist nicht auf die oben skizzierten Beispiele und angegebenen Aspekte und Anwendungen beschränkt, sondern ebenso in einer Vielzahl von Abwandlungen möglich, die im Rahmen fachgemäßen Handelns liegen.

## Patentansprüche

1. Verfahren zum Training und Betrieb eines Spracherkenners, insbesondere zur sprecherunabhängigen Spracherkennung, mit einer Mehrzahl von Sprachproben-Datenbasen, wobei im Ergebnis des Trainings ein Gesamtmodell gebildet und dieses beim Betrieb des Spracherkenners benutzt wird,
**dadurch gekennzeichnet, daß**
mindestens ein Teil der Sprachproben-Datenbasen in Abstimmung auf jeweils eine vorbestimmte typische Betriebsumgebung des Spracherkenners gebildet und jeweils mit einer Kennzeichnung dieser Betriebsumgebung versehen ist,
der Spracherkenner in relativ selbständigen Trainingsphasen zur Gewinnung von Referenzen jeweils separat mit diesen Sprachproben-Datenbasen trainiert wird, wobei die erhaltenen Referenzen im Gesamtmodell unter Kennzeichnung der Betriebsumgebung separat gespeichert werden, und
der Spracherkenner in jeder Betriebsumgebung mit mindestens den dieser Betriebsumgebung zugeordneten Referenzen, insbesondere mit separaten Verarbeitungsvorgängen mit allen gespeicherten Referenzen, betrieben wird.

2. Verfahren nach Anspruch 1,
**dadurch gekennzeichnet, daß**
mindestens eine der Sprachproben-Datenbasen für eine in typischer Weise akustisch gestörte Betriebsumgebung des Spracherkenners, insbesondere den Innenraum eines fahrenden Verkehrsmittels mit hohem Hintergrundgeräuschpegel, gebildet ist.

3. Verfahren nach Anspruch 1 oder 2,
**dadurch gekennzeichnet, daß**
mindestens eine der Sprachproben-Datenbasen mit begrenztem Vokabular einer typischen Applikation des Spracherkenners, insbesondere einem vorbestimmten Steuerwortschatz für die Bedienung eines Pkw und/oder Navigationssystems oder einer Audio- bzw. Videoanlage oder eines Computers oder von Geräten einer Hausinstallation, gebildet ist.

4. Verfahren nach einem der vorangehenden Ansprüche,
**dadurch gekennzeichnet, daß**
mehrere Sprachproben-Datenbasen jeweils durch verschiedene Sprecher oder eine Mehrzahl von Sprechern mit ähnlichen Sprachmerkmalen, insbesondere Sprecher gleichen Geschlechts und/oder gleicher Alterstufe und/oder gleichen Dialekts bzw. gleicher Mundart, eingesprochen werden.

5. Verfahren nach einem der vorangehenden Ansprüche,
**dadurch gekennzeichnet, daß**
als Systeme von Referenzen Wortmodelle und/oder phonetische Modelle, insbesondere als Hidden-Markov-Modelle, gebildet und im Betrieb genutzt werden.

6. Verfahren nach einem der vorangehenden Ansprüche,
**dadurch gekennzeichnet, daß**
der Spracherkenner zur Unterstützung einer Grammatik zur Spracherkennung auf Satzebene ausgebildet ist und hierfür in jeder Betriebsumgebung nur dieser Betriebsumgebung zugeordnete Referenzen eingesetzt werden, derart, daß Grammatik-Hypothesen des Spracherkenners ausschließlich aus der der spezifischen Betriebsumgebung entsprechenden Sprachproben-Datenbasis abgeleitet werden.

7. Verfahren nach einem der vorangehenden Ansprüche,
**dadurch gekennzeichnet, daß**
im Betrieb des Spracherkenners für die verschiedenen Betriebsumgebungen zugeordneten Referenzen jeweils separat Erkennungshypothesen berechnet werden, für die einzelnen Erkennungs-Hypothesen jeweils ein Wahrscheinlichkeitswert bestimmt wird und die Erkennungs-Hypothese mit der größten Wahrscheinlichkeit als Erkennungsergebins ausgegeben wird.

8. Spracherkenner mit einem sprecherunabhängig trainierten Sprachmodell, insbesondere Hidden-Markov-Modell, welches mit Sprachproben-Datenbasen trainierte Referenzen aufweist,
**dadurch gekennzeichnet, daß**
in Zuordnung zu dem Sprachmodell mehrere separat trainierte und mit einer Kennzeichnung für eine typische Betriebsumgebung des Spracherkenners versehene Systeme von Referenzen gespeichert sind und eine Verarbeitungseinheit mit einer Mehrzahl separater Verarbeitungswege vorgesehen ist, welche in jedem Verarbeitungsweg auf ein System von Referenzen zugreift und aufgrund eines gespeicherten Algorithmus ein Erkennungsergebnis bzw. eine Erkennungs-Hypothese berechnet.

9. Spracherkenner nach Anspruch 8,
**dadurch gekennzeichnet, daß**
die Verarbeitungseinheit zur Bestimmung einer ZutreffensWahrscheinlichkeit für jede auf einem Verarbeitungsweg gewonnene Erkennungs-Hypothese ausgebildet ist und eine Sortierstufe zum Ordnen die Erkennungs-Hypothesen nach ihrer Wahrscheinlichkeit und zur Ausgabe der Erkennungs-Hypothese mit der höchsten Wahrscheinlichkeit als Erkennungsergebnis ausgebildet ist.

10. Spracherkenner nach Anspruch 8 oder 9,
**dadurch gekennzeichnet, daß**
die Systeme von Referenzen als Wortmodelle und/oder phonetische Modelle ausgebildet sind.

11. Spracherkenner nach einem der Ansprüche 8 bis 10,
**gekennzeichnet durch**
einen Hypothesengenerator zur Unterstützung einer Grammatik zur Spracherkennung auf Satzebene, wobei der Hypothesengenerator in jedem Betriebszustand zum ausschließlichen Zugriff auf ein ausgewähltes System von Referenzen ausgebildet ist.

12. Spracherkenner-Trainingssystem zur Durchführung des Verfahrens nach einem der Ansprüche 1 bis 7,
**gekennzeichnet durch**
eine Mehrzahl von Sprachproben-Datenbasen, die jeweils in Abstimmung auf eine vorbestimmte typische Betriebsumgebung des Spracherkenners gebildet und mit einer Kennzeichnung dieser Betriebsumgebung versehen sind,
eine Trainingssteuereinheit zur Steuerung des Trainings in relativ selbständigen Trainingsphasen mit den Sprachproben-Datenbasen und
eine Gesamtmodell-Erzeugungseinheit zur Bildung eines Gesamtmodelles unter separater Speicherung der in den Trainingsphasen erhaltenen Referenzen mit Kennzeichnung der jeweiligen Betriebsumgebung.
